Europäisches Patentamt

European Patent Office

Office européen des brevets

(11) Numéro de publication: **0 261 001**
A1

## (12) DEMANDE DE BREVET EUROPEEN

(21) Numéro de dépôt: 87400344.5

(22) Date de dépôt: 17.02.87

(51) Int. Cl.⁴: **A 01 K 85/04**

(30) Priorité: 19.09.86 FR 8613175

(43) Date de publication de la demande: 23.03.88
Bulletin 88/12

(84) Etats contractants désignés: BE CH DE ES GB IT LI NL
SE

(71) Demandeur: Amourelle, Olivier, 16 Rue Bailly,
F-92200 Neuilly (FR)

(72) Inventeur: Amourelle, Olivier, 16 Rue Bailly,
F-92200 Neuilly (FR)

(74) Mandataire: Letheule, Jacqueline, 5 Rue José-Maria de
Hérédia, F-75007 Paris (FR)

(54) **Palette pour leurre de pêche à cuiller tournante.**

(57) Suivant l'invention la palette est constituée par une pièce 10 longitudinalement en forme générale de pale d'hélice dont une extrémité 12 est perforée pour la liaison requise avec une monture de leurre, tandis que l'autre extrémité 10a est coudée par rapport à l'axe de la dite pièce, formant ainsi un angle avec le dit axe, de telle sorte que durant le mouvement imprimé de la dite forme en pale d'hélice assure la rotation axiale, tandis que la dite extrémité coudée 10a détermine une avantageuse inclinaison relativement au mouvement axial, accélère ce dernier et simultanément décolle la palette de l'axe au cours de la rotation. L'extrémité coudée 10a par rapport à l'axe de la palette 18 est elle-même en forme de pas d'hélice suivant son propre axe.

EP 0 261 001 A1

Palette pour leurre de pêche à cuiller tournante.

La présente invention concerne les leurres pour la pêche, du type comprenant une monture et une palette ou cuiller montée pivotante sur la monture, cette palette étant mise en rotation sous l'effet du mouvement du leurre dans l'eau.

On peut rappeler ici brièvement le principe de la pêche à la cuiller tournante. Dans ce genre de pêche la rotation de la palette est provoquée par le mouvement longitudinal relatif entre la monture et l'eau dans laquelle le leurre est immergé. Cette rotation à cadence relativement rapide provoque des vibrations mécaniques qui se transmettent dans le milieu aqueux, et ce sont ces vibrations qui attirent et leurrent les poissons carnassiers tombant dans le piège ainsi constitué.

Dans la technique entérieure il est connu d'une manière générale de constituer des leurres en matière plastique tel que par exemple dans les brevets français 916 690 (ALCAY), 1 030 673 (DUBORGE), 1 524 310 (TERRENI), et anglais 560 22L (FINLAY)°

Il est connu aussi d'adopter une forme générale hélicoïdale pour déterminer la rotation de la palette lorsque cette dernière est mise en mouvement le long de son axe. On peut citer à titre d'exemple de la technique connue le brevet français No 916 690 (ALCAY) dans lequel il est donné à la palette une forme d'hélice simple suivant l'axe mais nécessitant une liaison en deux points sur la tige de l'ensemble, ce qui présente des inconvénients et ne permet pas de donner à la palette la forme avantageuse de celle qui est décrite dans l'invention ni d'obtenir les résultats favorables qu'elle procure.

On peut encore citer dans l'art antérieur le brevet français No 1 524 310 (TERRENI) dans lequel il est prévu en un point prédéterminé de la palette de replier légèrement une partie des bords de cette dernière en opposition d'un côté et de l'autre afin d'obtenir sur une faible section de la longueur de la palette une amorce de forme d'hélice, l'ensemble du corps étant lui-même plan et formant un triangle développé suivant l'axe de la palette, ce qui, ainsi qu'on va le voir n'a pas de rapport avec la forme beaucoup plus étudiée et efficace de la palette objet de l'invention. De plus la palette selon le brevet 1 524 310 cité doit être lestée, ce qui n'est pas indispensable pour la palette selon l'invention.

La présente invention concerne une palette de leurre pour la pêche à la cuiller tournante, du type comprenant une pièce sensiblement allongée en forme générale de pale d'hélice, prévue pour être montée par une de ses extrémités sur une monture de leurre, tandis que l'autre extrémité est coudée par rapport à l'axe de la dite pièce, formant ainsi un angle avec le dit axe, de telle sorte que durant le mouvement imprimé la dite forme en pale d'hélice assure la rotation axiale, tandis que la dite extrémité coudée détermine une avantageuse inclinaison relativement au mouvement axial, accélère ce dernier et simultanément décolle la palette de l'axe au cours de la rotation.

On décrira ci-après un mode de réalisation de l'invention en se référant au dessin annexé dans lequel :

les figures 1a, 1b, 1c représentent respectivement une vue perspective , de dessus et de l'arrière de la palette

la figure 2 une vue en perspective de la palette montée avec son hameçon,

la figure 3 une variante de réalisation de la palette représentée figure 2.

Sur ces différentes figures les éléments communs dont désignés par des références identiques.

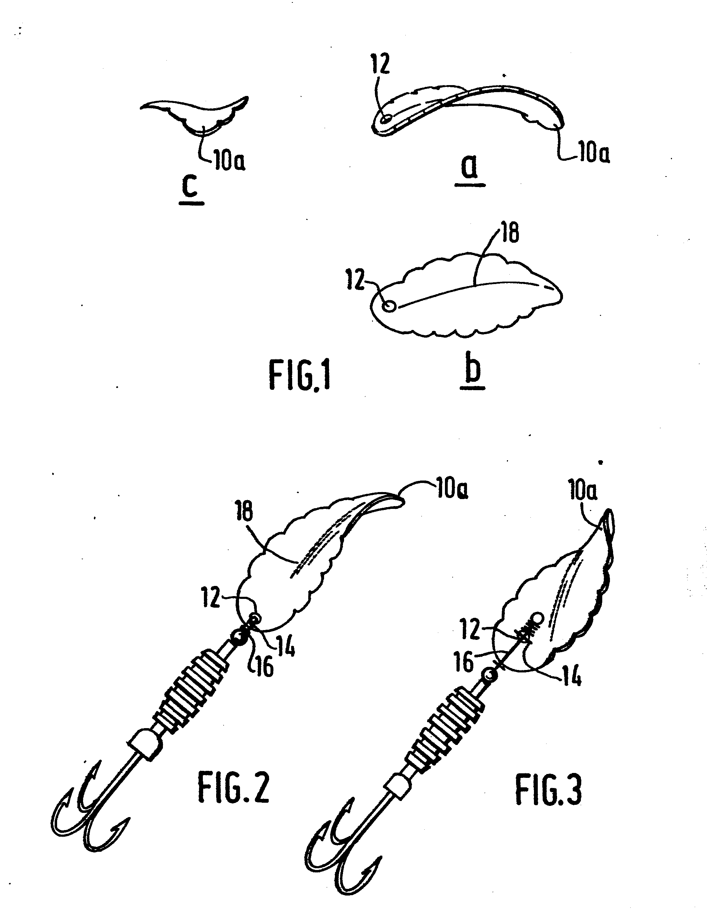

Sur la figure 1a ,une palette de leurre 10 affecte une forme allongée à une extrémité de laquelle,dans cet exemple,est pratiqué un trou 12 permettant une fixation pivotante sur une monture de leurre de type connu, dans cet exemple par l'intermédiaire d'un étrier 14 tourillonant autour de l'axe 16(figure 2).Ce trou pourrait être pratiqué en un point différent de celui qui a été indiqué figures 1 et 2 et tel que représenté figure 3 .

Cette palette est longitudinalement en forme de pale d'hélice,c'est

3   0261001

à-dire suivant son axe 18 représenté en traits interrompus.
Le pas de la pale d'hélice est avantageusement non constant
et par exemple plus court vers l'extrémité 10a opposée à celle
qui est perforée. Cette extrémité 10 a est coudée par rapport
à l'axe de la pièce et est elle-même en forme de pale d'hélice.
La forme hélicoïdale de la palette provoque la rotation spontanée
souhaitée lors d'un mouvement longitudinal et la partie coudée
10 a détermine une inclinaison avantageuse de la pièce relativement à son axe.

Une palette constituée suivant la forme qui vient d'être définie
permet d'utiliser un matériau de faible densité, tel qu'une
matière plastique, par exemple les polycarbonates, ou tout autre
matériau possédant des propriétés identiques: teinture dans la
masse, légereté ,etc...

Les avantages d'une telle palette sont nombreux. D'une part,on
conçoit qu'il est extrêmement facile d'agir sur la vitesse de
rotation de la palette et sur son angle d'inclinaison.
Il suffit pour cela de modifier le pas de la portion d'hélice
définie par le corps de la palette et de modifier au cours de la
fabrication l'angle d'inclinaison et/ou la surface utile du
coude d'extrémité libre 10a.

D'autre part, il sera extrêmement aisé de réaliser des palettes
teintées dans la masse,et dont la coloration sera ainsi conservée dans le temps. L'invention permet également de réaliser des
palettes transparentes ou translucides,ce qui permet une meilleure imitation de certains poissons.

En outre, on pourra prévoir, selon les besoins, une palette
d'épaisseur non uniforme, et par exemple amincie dans la région
de ses bords latéraux,en particulier pour un meilleur effet de
pénétration dans l'eau.  De plus, il est également favorable que
les bords latéraux soient prévus avec une dentelure.

La rotation peut également encore être améliorée en prévoyant
aussi bien rugosité, aspérités et rainures, avec pour conséquence
d'agir sur les parties correspondantes de la palette pour déterminer soit freinage, soit accélération du mouvement.

On peut noter aussi que l'utilisation de matière plastique permet avantageusement d'agir sur la densité, l'élasticité, la dureté, etc... de la palette, en fonction de l'utilisation souhaitée.

On notera également que la matière plastique constitutive peut être chargée de produits odorants destinés à être parçus par les poissons à toutes fins utiles, ou de produits de synthèse évoquant l'odeur de sang d'un poisson blessé.

De plus, le fait d'employer une matière plastique permet d'éviter les bruits qui sont engendrés habituellement par un leurre à palette métallique lorsque ce dernier touche un plan d'eau calme. Avec une palette en matière plastique le bruit est plus mat et amorti, au profit de l'efficacité de la pêche; la palette vibre peu mais émet des ondes semblables à celles du déplacement d'un poisson dans l'eau:un glissement".

Enfin l'invention influe sensiblement sur le coût d'une telle palette qui est nettement inférieur à celui des palettes métalliques classiques.

Bien entendu, la présente invention n'est nullement limitée au mode de réalisation décrit, mais inclut toute variante ou modification que pourra y apporter l'homme de l'Art.

En particulier, les divers paramètres dimensionnels de la palette pourront être largement modifiés en fonction des exigences, ainsi que son aspect général et la matière plastique choisie pour sa fabrication.

0261001

## R E V E N D I C A T I O N S

1. Palette de leurre pour la pêche à la cuiller tournante, caractérisée en ce qu'elle est constituée par une pièce (10) longitudinalement en forme générale de pale d'hélice dont une extrémité (12) est perforée pour assurer la liaison requise avec une monture de leurre,tandis que l'autre extrémité (10a) est coudée par rapport à l'axe de la dite pièce, formant ainsi un angle avec le dit axe, de telle sorte que durant le mouvement imprimé la dite forme en pale d'hélice assure la rotation axiale , tandis que la dite extrémité coudée (10a) détermine une avantageuse inclinaison relativement au mouvement axial, accélère ce dernier et simultanément décolle la palette de l'axe au cours de la rotation.

2. Palette selon la revendication 1, caractérisée en ce que le pas d'hélice n'est pas constant et tel que plus court à la partie (10a) opposée à la partie perforée.

3. Palette selon la revendication 1, caractérisée en ce que la pièce est amincie le long de ses bords longitudinaux,assurant ainsi notamment un meilleur effet de pénétration dans l'eau.

4. Palette selon la revendication 1, caractérisée en ce que ses bords latéraux sont dentelés.

5. Palette selon la revendication 1, caractérisée en ce que l'extrémité coudée (10a) par rapport à l'axe de la pièce est elle-même en forme de pas d'hélice suivant son propre axe.

6. Palette selon les revendications 1 et 4, caractérisée en ce que les angles des pas peuvent être modifiés au cours de la fabrication pour déterminer une action plus ou moins rapide.

7. Palette selon la revendication 1, caractérisée en ce que le trou prévu pour la liaison à la monture est pratiqué sur l'axe(18) de la palette mais en un point différent de la partie extrême (12 Fig.3)

8. Palette selon la revendication 1, caractérisée en ce que la palette peut être constituée par une matière plastique chargée en produits odorants destinés à être perçus par des poissons à toutes fins utiles·

12

10a

a

c

10a

18

12

FIG.1

b

18

10a

10a

12

14

16

FIG.2

18

12

16

14

FIG.3

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 586 166 (AMOURELLE) <br><br> * En entier * <br><br> --- | 1,3,7, 8 | A 01 K 85/04 |
| A | FR-E- 66 692 (FERRARI) <br> * Figure 2 * <br><br> --- | 1,7 | |
| A | US-A-3 104 486 (GRESSARD) <br> * Figures 1,5 * <br><br> --- | 1,7 | |
| D,A | FR-A-1 030 673 (DUBORGEL) <br><br> --- | | |
| D,A | FR-A- 916 690 (ALCAY) <br><br> --- | | |
| D,A | FR-A-1 524 310 (TERRENI) <br><br> --- | | |
| D,A | GB-A- 560 221 (FINLAY) <br><br> --- | | |
| A | US-A-3 775 892 (BENNETS) <br><br> --- | | |
| A | FR-A-1 090 612 (OFFICE TECHNIQUE INTERNATIONAL) <br> * En entier * <br><br> ---     -/- | 8 | |

**DOMAINES TECHNIQUES RECHERCHES (Int. Cl.4)**

A 01 K

Le présent rapport de recherche a été établi pour toutes les revendications

| Lieu de la recherche | Date d'achèvement de la recherche | Examinateur |
|---|---|---|
| LA HAYE | 11-11-1987 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | DE-A-3 333 249 (BERND) | | |

-----

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 11-11-1987 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB-Form 1503 03 82